# EUROPÄISCHE PATENTSCHRIFT

(11) **EP 3 237 183 B1**
(45) Veröffentlichungstag und Bekanntmachung des Hinweises auf die Patenterteilung: **18.11.2020**
(21) Anmeldenummer: 15817312.0
(22) Anmeldetag: 21.12.2015
(51) Int. Cl.: B29C 70/68, B29D 24/00, B32B 38/08, B32B 37/18, B32B 38/00, B32B 37/14, B32B 37/10

(54) **VERFAHREN UND VORRICHTUNG ZUR HERSTELLUNG EINES SANDWICHBAUTEILS**
METHOD AND APPARATUS FOR MANUFACTURING A SANDWICH COMPONENT
PROCÉDÉ ET DISPOSITIF DESTINÉS À LA FABRICATION D'UNE PIÈCE EN SANDWICH

(30) Priorität: 22.12.2014 EP 14199862
(43) Veröffentlichungstag der Anmeldung: 01.11.2017
(73) Patentinhaber: Magna Steyr Fahrzeugtechnik AG & Co. KG, 8041 Graz (AT)
(72) Erfinder: WOLFSBERGER, Günter, 8501 Lieboch (AT)
(74) Vertreter: Zangger, Bernd
(86) Internationale Anmeldenummer: PCT/EP2015/080778
(87) Internationale Veröffentlichungsnummer: WO 2016/102454

(56) Entgegenhaltungen:
- EP-A1- 1 603 735
- EP-A1- 2 440 452
- DE-A1- 10 153 973
- DE-A1-102013 013 419
- US-A- 4 331 495
- US-A- 5 096 526
- US-A- 6 114 050

## Beschreibung

### Gebiet der Erfindung

Die vorliegende Erfindung betrifft ein Verfahren zur Herstellung eines Sandwichbauteils.

### Stand der Technik

Unter einem Sandwichbauteil ist in der Regel ein Bauteil zu verstehen, das aus Schichten gleicher oder unterschiedlicher Werkstoffe zusammengesetzt ist. Im einfachsten Fall bestehen Sandwichbauteile aus zwei Deckschichten, einer oberen Deckschicht und einer unteren Deckschicht, sowie einer Kernschicht, die zwischen der oberen Deckschicht und der unteren Deckschicht angeordnet ist. Eine Verbindung zwischen den einzelnen Schichten erfolgt meist durch Verpressen mittels eines geeigneten Werkzeugs, wie zum Beispiel einer Presse.

Derartige Sandwichbauteile finden in vielen unterschiedlichen Branchen Anwendung. In den letzten Jahren ist ihre Bedeutung jedoch insbesondere als Strukturbauteil im Bereich des Automobil-Leichtbaus enorm gestiegen. Unter "Strukturbauteil" werden dabei dreidimensional ausgebildete Bauteile verstanden, die nicht notwendigerweise tragende Bauteile des Fahrzeuges sein müssen. Beispielsweise können das auch Frontklappen, Heckklappen oder Türen sein.

Der Stand der Technik offenbart eine Vielzahl von unterschiedlichen Ansätzen zur Herstellung von Strukturbauteilen.

In der DE 10 2012 222 376 A1 beispielsweise wird ein Verfahren für die Herstellung eines Sandwichbauteils für die Verwendung als Strukturbauteil eines Fahrzeugs beschrieben. Hierbei wird zuerst eine innere Deckschicht in einem Werkzeug angeordnet, auf der inneren Deckschicht wird eine zumindest abschnittsweise poröse Kernschicht angeordnet und wiederum darauf eine äußere Deckschicht. Nach beschriebener Anordnung der einzelnen Schichten wird ein Prozessdruck gegen die beiden Deckschichten und ein Kerndruck in der Kernschicht zum Druckausgleich gegen den Prozessdruck erzeugt. So wird die Kernschicht nicht durch einen zu hohen Prozessdruck belastet und muss in Bezug auf ihre Stabilität nicht überdimensioniert werden.

Die DE 10 2013 013 419 A1 offenbart ein kontinuierliches Fertigungsverfahren zur Herstellung sichtseitig verschiedenartiger Sandwichbauteile, eine Vorrichtung zur Herstellung des Sandwichbauteils und ein damit herstellbares Sandwichbauteil. Das in dieser Schrift vorgestellte Verfahren zur Herstellung des Sandwichbauteils umfasst ausgehend von einem Deckschicht-Kernlage-Deckschicht Stapel, wobei die Deckschichten aus thermoplastischen Fasermateriallagen bestehen, ein ersten Erwärm-Schritt der Sandwichanordnung, wobei die Sandwichanordnung solange erwärmt wird, bis das thermoplastische Material der Fasermateriallage zumindest zu fließen beginnt. Das Erwärmen erfolgt in einem Heizwerkzeug, zum Beispiel einer Heizpresse. Bei Verwendung der Heizpresse bewirkt der erzeugte Pressdruck ein Anhaften der thermoplastischen Fasermateriallagen an dem Wabenkern (Kernlage). Im nächsten Verfahrensschritt wird eine Dekorlage mit Schaumlage auf der erwärmten Sandwichanordnung so angeordnet, dass die Schaumlage zu der Deckschicht weist. Der zähflüssige Thermoplast der Deckschicht sorgt für Haftung der Schaumlage an der Sandwichanordnung. Danach wird die Oberfläche der Dekorlage mittels Formschablone der Oberflächenstruktur angepasst, die die fertige Sandwichanordnung haben sollte. Dazu werden eine oder mehrere Formschablone(n) an einer oder beiden Basisformoberflächen des Formpresswerkzeuges angeordnet. Den abschließenden Schritt des Verfahrens stellt die gekühlte Formpressung mittels einer Formpresse dar.

Ebenso beschreibt die DEP 1 897 680 A1 ein Verfahren zur Herstellung eines faserverstärkten Sandwichbauteils mit einem Wabenkern, wobei der Wabenkern nur einseitig mittels einer Deckschicht verschlossen ist, jedoch die Waben der Wabenschicht beidseitig verschlossen sind. Das Verfahren umfasst dabei die Schritte: -Herstellen eines Geleges umfassend den Wabenkern, sowie zumindest einseitig auf dem Wabenkern, von Innen nach Außen angeordnet, eine aushärtbare Klebeschicht, eine Sperrschicht und eine Faserschicht; - Einschließen des Geleges in einen gasdichten Raum; -Erzeugen eines Vakuums in diesem gasdichten Raum; Aus- bzw. Anhärten der Klebeschicht zwischen Wabenkern und Sperrschicht unter diesem Vakuum, so dass die Wabenzellen zumindest teilweise evakuiert sind bevor sie durch die Sperrschicht verschlossen werden; -nach dem Aus- bzw. Anhärten der Klebeschicht, Infusion der Faserschicht unter Vakuum mit einem Matrixmaterial, -Aushärten des Matrixmaterials unter Vakuum.

### Aufgabenstellung

Es ist eine Aufgabe der Erfindung ein alternatives Verfahren zur Herstellung eines Sandwichbauteils vorzuschlagen, wobei die Eigenschaften des Sandwichbauteils für verschiedene Einsatzzwecke optimierbar sein sollen.

Diese Aufgabe wird durch ein Verfahren zur Herstellung eines Sandwichbauteils mit den Merkmalen gemäß Patentanspruch 1 gelöst. Vorteilhafte Ausgestaltungen der Erfindung sind den abhängigen Patentansprüchen zu entnehmen.

Das erfindungsgemäße Verfahren zur Herstellung eines Sandwichbauteils beinhaltet die folgenden Schritte:
- Bereitstellen mehrerer Materialzuschnitte,
- Aufbringen zumindest eines Matrixmaterials auf die Ober- und/oder Unterseite zumindest eines Materialzuschnittes,
- Anordnen der Materialzuschnitte übereinander und nebeneinander, wobei zumindest zwei Materialzuschnitte übereinander angeordnet werden,
- wobei zumindest zwei der Materialzuschnitte Fasermaterial umfassen, wobei zumindest zwei der Materialzuschnitte unterschiedlich ausgebildet sind, dadurch dass die zwei Materialzuschnitte eine voneinander verschiedene Fläche aufweisen, so dass zumindest eine horizontale und vertikale Zone des Sandwichbauteils geschaffen wird mit anderen mechanischen Eigenschaften als andere Bereiche des Sandwichbauteils,
- Verpressen der Materialzuschnitte zu dem Sandwichbauteil.

Die Materialzuschnitte sind zumindest vor dem Verpressen im Wesentlichen flache Bauteile mit einer definierten Umrandung.

Eine "horizontale Zone" erstreckt sich dabei erfindungsgemäß über einen Bereich des Sandwichbauteils in Längsrichtung, also normal auf dessen Schichtaufbau aus Materialzuschnitten. Eine "vertikale Zone" erstreckt sich in Richtung des Schichtaufbaues des Sandwichbauteils, also normal auf dessen Erstreckung in Längsrichtung.

Auf diese Weise ist es möglich ein oder mehrere spezielle Zonen, beispielsweise zur Vermeidung von Verletzungen bei Fußgängerkollisionen und dergleichen, auszubilden, wobei sich die speziellen Zonen jeweils von anderen Zonen oder Bereichen des Bauteils unterscheiden.

Die zumindest zwei Materialzuschnitte sind erfindungsgemäß dadurch unterschiedlich ausgebildet, dass die zwei Materialzuschnitte eine voneinander verschiedene Fläche aufweisen.

Unter "verschiedene Fläche" der Materialzuschnitte ist eine unterschiedliche zweidimensionale geometrische Form und/oder Größe der Materialzuschnitte, bzw. bei Unebenheiten einer zweidimensionalen Projektion der Materialzuschnitte, zu verstehen.

Durch die Verwendung von Materialzuschnitten unterschiedlicher Fläche werden Zonen mit unterschiedlichen Eigenschaften, insbesondere Festigkeit, Steifigkeit, geschaffen, da unterschiedlich geformte Materialzuschnitte in manchen Bereiche des Bauteils anwesend sind und in anderen Bereichen fehlen.

Erfindungsgemäß umfassen zumindest zwei der Materialzuschnitte Fasermaterial.

Das durch das erfindungsgemäße Verfahren hergestellte Sandwichbauteil ist im Wesentlichen aus mehreren, zumindest zwei, Schichten von Materialzuschnitten aufgebaut. Eine vorzugsweise vorgesehene Kernschicht ist dabei bevorzugt zwischen zumindest zwei der Materialzuschnitte angeordnet.

Die Materialzuschnitte sind bevorzugt aus Fasermaterial gefertigt und im Vergleich zur als Kernschicht ausgebildeten Schicht vorzugsweise dünn gestaltet. Die dabei benutzen Fasern sind Naturfasern, wie beispielsweise Hanffasern, Bambusfasern, auf Zellulose basierende Fasern etc., und/oder organische sowie anorganische Chemiefasern, wie beispielsweise Polyamidfasern, Glasfasern, Kohlenstofffasern etc..

Das Fasermaterial ist somit bevorzugt aus Fasern aufgebaut, die zu Geweben, Vliesen, Gestricke, Matten, Gitter, etc. verarbeitet sind, wobei diese Gebilde bevorzugt in eine je nach Anforderung passende Grundmatrix zu sogenannten Verbundwerkstoffen weiterverarbeitet sind.

Die Materialzuschnitte (aus Fasermaterial) sind in einer vorteilhaften Ausführungsvariante des erfindungsgemäßen Verfahrens vorbehandelt, wobei dabei sämtliche dem Fachmann geläufige Arten der Vorbehandlung, wie beispielsweise Primern, Imprägnieren, Beschichten, etc., in Frage kommen.

Die verwendeten einzelnen Materialzuschnitte können sich voneinander in ihrer (Grund-) Zusammensetzung und Ausgestaltung unterscheiden.

Vorteilhafterweise sind die Materialzuschnitte für das Matrixmaterial durchlässig ausgebildet.

Das Aufbringen zumindest eines Matrixmaterials auf die Ober- und/oder Unterseite zumindest eines Materialzuschnittes kann so erfolgen, dass auf zumindest zwei der Materialzuschnitte in unterschiedlicher Weise Matrixmaterial aufgebracht wird.

Gemäß dem erfindungsgemäßen Verfahren wird das Matrixmaterial somit vorteilhafterweise homogen und/oder inhomogen auf eine oder mehrere Materialbahnen aufgetragen.

Die einzelnen Materialzuschnitte sind in einer Ausführungsvariante schichtartig ausgebildet, das heißt, dass sie aus zumindest zwei Einzelschichten aufgebaut sind, wobei zumindest eine der Einzelschichten ein Fasermaterial ist.

Einzelschichten aus Nicht-Fasermaterial bestehen dabei vorteilhafterweise aus Kunststoff und sind folienartig ausgebildet.

Zumindest zwei der Materialzuschnitte können ausschließlich vor der Fertigstellung des Sandwichbauteils eine unterschiedliche Fläche aufweisen, da zumindest ein Materialzuschnitt im Herstellungsprozess auf gleiche Fläche mit einem weiteren Materialzuschnitt geschnitten werden kann. Erfindungsgemäß können natürlich Materialzuschnitte auch nach der Fertigstellung verschiedene Fläche haben. Bevorzugt hat zumindest ein Materialzuschnitt, besonders bevorzugt haben die meisten oder alle Materialzuschnitte bereits vor Aufbringen des Matrixmaterials die Form des gewünschten Sandwichbauteils.

Das Matrixmaterial ist bevorzugt aus einem thermoplastischen und/oder duroplastischen Kunststoff.

Das Matrixmaterial ist bevorzugt ein Harz, besonders bevorzugt ein Kunstharz (z.B. Polyurethan).

Besonders bevorzugt ist das Matrixmaterial klebstoffartig ausgebildet und weist beispielsweise die Hauptkomponenten Harz und Härter bzw. Basis und Härter auf.

Um die Matrixmaterial-Eigenschaften in Bezug auf diverse Anforderungen, wie beispielsweise Festigkeit oder Elastizität, zu beeinflussen sind dem Matrixmaterial vorteilhafterweise Zusatzkomponenten und/oder -materialien, wie beispielsweise Fasern, zugemischt.

Hierbei können dem Matrixmaterial homogen oder inhomogen Kurz- und/oder Langfasern beigemischt sein, um so in unterschiedlicher Weise, d.h. homogen und/oder inhomogen, Matrixmaterial auf die Materialzuschnitte aufzutragen. So werden ebenfalls unterschiedliche Bauteileigenschaften, wie beispielsweise eine inhomogene und/oder homogene Zonensteifigkeit über die Fläche der Materialzuschnitte erzeugt. Insbesondere kann auch durch unterschiedliche Beimischung von Fasern zumindest eine Zone mit anderen mechanischen Eigenschaften ausgebildet werden, als andere Bereiche des Bauteils. Somit ergibt sich ein Sandwichbauteil mit homogenen und/oder inhomogenen Schichtaufbau sowohl über die Fläche des Bauteiles als auch über den Lagen-Schichtaufbau.

Die Materialzuschnitte werden bevorzugt in einem Fächergreifer (kann auch "Klappgreifer" genannt werden) montiert und nach dem einseitigen und/oder beidseitigen Aufbringen von Matrixmaterial, vorzugsweise durch Besprühen, mit dem vorzugsweise ebenfalls auf einem Fächer des Greifers angeordneten Kern oder auch mehreren Kernen zusammengefahren (vertikal übereinander positioniert) und ergeben somit den Lagenaufbau des Sandwichbauteiles.

Die Materialzuschnitte können in den einzelnen Lagen in unterschiedlicher Form vorliegen, entweder in einer Größe, die ein vollständiges überdecken des herzustellenden Bauteils ermöglicht oder auch nur ein teilweises Abdecken der Fläche des herzustellenden Bauteiles ermöglich, um hierdurch einen unterschiedlichen Schichtaufbau herzustellen bzw. ein Bauteil, dass mit unterschiedlichen Funktions- bzw. Bauteileigenschaften in verschiedenen Zonen ausgestattet ist. Von Vorteil ist es hierzu ebenfalls, wenn sich die Art und/oder Beschaffenheit der Fasern in zumindest zwei Lagen, also Materialzuschnitten, voneinander unterscheidet. Zusätzlich ist es von Vorteil, wenn sich die (überwiegenden) Faserrichtungen bzw. der Faserverlauf bzw. die Faserorientierung der in den Materialzuschnitten enthaltenen Fasern von zumindest zwei Lagen voneinander unterscheiden, vorzugsweise in zumindest zwei Einzel-Lagen in jeweils unterschiedliche Richtung weisen, beispielsweise zueinander in einem Winkel größer als 0 und kleiner als 180 Grad verdreht sind, oder auch um 180 Grad verdreht sind.

Hierbei können die Materialzuschnitte oder die der Kontur des Sandwichbauteiles entsprechend vorkonfektionierten Einzel-Lagen vor dem weiteren Zuschnitt bzw. vor dem Bringen in die unterschiedliche Fläche entsprechend verdreht werden oder die Materialzuschnitte, von denen zumindest zwei eine unterschiedliche Fläche aufweisen und/oder von denen sich die Faserrichtung(en), der Faserverlauf bzw. die Faserorientierung von zumindest zwei Lagen unterscheiden, auf vorzugsweise jeweils einem Fächer des Fächergreifers angeordnet werden. Während des Zeitraums in dem die Materialzuschnitte in den Fächern des Fächergreifers montiert sind laufen die Schritte Aufbringen zumindest eines Matrixmaterials auf die Ober- und/oder Unterseite zumindest einer der Materialzuschnitte, wobei auf zumindest zwei der Materialzuschnitte in unterschiedlicher Weise Matrixmaterial aufgebracht werden kann und auf zumindest eine der Materialzuschnitte entlang deren Fläche in unterschiedlicher Weise Matrixmaterial aufgebracht werden kann, wobei die Materialzuschnitte eine Kernschicht umfassen können und Verpressen der Materialzuschnitte und der bevorzugt vorhandenen Kernschicht in einer Presse in im Wesentlichen eben dieser Reihenfolge ab.

Bei der Verpressung des Bauteils wird auch der Kern vorzugsweise lokal oder ganzflächig so verpresst werden, dass dies zur Herstellung der Bauteilgeometrie dient.

Somit steht am Anfang des Verfahrens ein Aufbringen zumindest eines Matrixmaterials auf die Ober- und/oder Unterseite zumindest eines der Materialzuschnitte.

Erfindungsgemäß erfolgt das Aufbringen des Matrixmaterials bevorzugt an der Ober- oder Unterseite der Materialzuschnitte, kann jedoch je nach Bedarf auch gleichzeitig an der Ober- und Unterseite der Materialzuschnitte erfolgen. Letzteres bedingt bei einem Aufbau aus mehreren Materialzuschnitten eine Zeitersparnis.

Das Aufbringen des Matrixmaterials auf die einzelnen Materialzuschnitte erfolgt dabei bevorzugt mittels Sprühauftrag und/oder Tauchprozess und/oder Rollauftrag (Auftrag mittels Rollen).

Die Aufbringeinheit ist besonders bevorzugt eine Sprüheinheit, wobei die Sprüheinheit bevorzugt zumindest zwei Sprühköpfe aufweist, wodurch auf einfache Art und Weise Matrixmaterial verschiedener Eigenschaften, wie beispielweise Viskosität, Thixotropie, Zusammensetzung etc., auf die Materialzuschnitte aufgetragen werden kann.
Dadurch lassen sich Sandwichbauteile mit partiell unterschiedlichen Eigenschaften in Bezug auf beispielsweise Zonensteifigkeit oder Oberflächenqualität erzeugen.
Weiters ist durch das individuelle (in verschiedener Weise) Aufbringen des Matrixmaterials auf die einzelnen Materialzuschnitte, sowie der Anpassung der Eigenschaften des Matrixmaterials (zum Beispiel Viskosität, Thixotropie, Menge) auf das jeweilige Material der Materialzuschnitte jeweils vergleichsweise nur ein dünner Matrix-Auftrag erforderlich, wodurch sich eine Gewichts- und Funktionsoptimierung ergibt.

In dem erfindungsgemäßen Verfahrens wird zwischen zwei sonstigen Materialzuschnitten zumindest ein als Kernschicht ausgebildeter Materialzuschnitt angeordnet. Diese Kernschicht bewirkt bei dem fertiggestellten Bauteil beispielsweise eine vorteilhafte Versteifung eben dieses Sandwichbauteils.

Die Kernschicht ist wabenartig ausgeführt. Andere Strukturierungen und Formen der Kernschicht, wie zum Beispiel eine wellenartige Ausbildung, sind jedoch nicht ausgeschlossen.
Die Kernschicht ist bevorzugt aus einem Leichtmaterial, wie beispielsweise einem Polymer (Schaumstoff, Kunststoff, Gummi, etc.), einem zellulose-basierten Material (Papier, Holz, Karton, etc.), einem Verbundwerkstoff oder auch einem Metall, ausgebildet.

In einer weiteren optionalen Ausführung ist die Kernschicht schichtartig ausgebildet - beispielsweise durch mehrere übereinander angeordnete Einzel-Kernschichten. Hierbei können die mindestens zwei Einzel-Kernschichten verschieden voneinander ausgebildet sein. Insbesondere können Wabenkerne mit unterschiedlicher Wabenform, Wabengröße, Wabenausrichtung, unterschiedlichen Steggeometrien und/oder Waben- und/oder Einzel-Kernschichtmaterial gestapelt und miteinander verbunden werden. Dies ist vor allem deshalb vorteilhaft, weil dadurch das spätere fertige Bauteil partiell mit unterschiedlichen Funktions- bzw. Bauteileigenschaften ausgestattet werden kann - einerseits soll das Bauteil eine bestimmte erforderliche Festigkeit und Steifigkeit aufweisen andererseits soll es aber an bestimmten Stellen weiche, leichter verformbare Zonen beinhalten, wie dies beispielsweise im Fahrzeugbereich zur Vermeidung von Verletzungen bei Kollisionen mit Fußgängern vorteilhaft ist.
Die Kernschicht ist vorzugsweise für das Matrixmaterial durchlässig, zumindest jedoch semidurchlässig, ausgebildet.
Die Materialzuschnitte werden in dem erfindungsgemäßen Verfahren zu dem Sandwichbauteil verpresst. Das Verpressen erfolgt mittels einer Presse bevorzugt im Nasspressverfahren.

Die Vorrichtung zur Durchführung des zuvor beschriebenen Verfahrens zur Herstellung eines Sandwichbauteils umfasst vorzugsweise im Wesentlichen eine Mehrlagen-Halteeinheit, wobei in der Mehrlagen-Halteeinheit mehrere Materialzuschnitte vertikal übereinander gehalten werden können, und zumindest eine Aufbringeinheit zum Aufbringen zumindest eines Matrixmaterials auf die Ober- und/oder Unterseite zumindest eines der Materialzuschnitte, und zumindest eine Presse zum Verpressen der Materialzuschnitte zu dem Sandwichbauteil.

Die Mehrlagen-Halteeinheit kann bevorzugt ein Fächergreifer sein, wobei im Fächergreifer mehrere Materialzuschnitte vertikal übereinander gehalten werden können und horizontal auseinander gefahren, also fächerartig entfaltet werden können, so dass die entfalteten Materialzuschnitte gut zugänglich für den Matrixauftrag sind. Für das Zustellen der Materialzuschnitte zur Presse können die Materialzuschnitte von der Mehrlagen-Halteeinheit, insbesondere Fächergreifer, in die Presse fallen gelassen werden oder auch während sie in der Mehrlagen-Halteeinheit, insbesondere Fächergreifer, gehalten sind von der Presse verpresst werden.

Die Mehrlagen-Halteeinheit, insbesondere Fächergreifer, umfasst vorzugsweise einen Handlingsroboter oder ist über ein lineares Handlingsystem geführt.

Die Presse zum Verpressen der Materialzuschnitte kann auch im Bereich einer oberen Pressplatte und/oder im Bereich einer unteren Pressplatte eine Schneidevorrichtung aufweisen. Durch die Anordnung der Schneidvorrichtung im Bereich der oberen Pressplatte und/oder der unteren Pressplatte wird ein gleichzeitiges Verpressen der Materialzuschnitte (inklusive der Kernschicht) zu einem Sandwichbauteil und ein weiteres, insbesondere finales Zuschneiden der Materialzuschnitte ermöglicht. So werden zwei Arbeitsschritte in einem Vorgang vereint.

Die Presse bzw. das Presswerkzeug kann auch heizbar ausgeführt sein.

Mittels der zumindest einen Aufbringeinheit wird zumindest ein Matrixmaterial auf die Ober- und/oder Unterseite zumindest eines der Materialzuschnitte aufgebracht.

Die Aufbringeinheit ist dabei bevorzugt eine Sprüheinheit und/oder eine Taucheinheit und/oder eine Rolleinheit.

Besonders bevorzugt ist die Aufbringeinheit eine Sprüheinheit mit zumindest einem zweiten Sprühkopf, wobei der zweite Sprühkopf vorzugsweise Matrixmaterial in unterschiedlicher Weise durch Aufbringen einer unterschiedlichen Menge und/oder unterschiedlichen Art von Matrixmaterial aufbringt.
Besonders vorteilhaft ist das Aufbringen mittels Sprühauftrag vermittels einer Sprüheinheit wenn dem Matrixmaterial zusätzliches Fasermaterial, wie beispielsweise Kurzfasermaterial, beigemischt ist.

### Kurzbeschreibung der Zeichnungen

Die Erfindung wird im Folgenden beispielhaft unter Bezugnahme auf die Zeichnungen beschrieben.
- Fig. 1: zeigt eine schematische Darstellung eines Fächergreifers und einer Aufbringeinheit einer Vorrichtung zur Durchführung des erfindungsgemäßen Verfahrens zur Herstellung eines Sandwichbauteils von oben.
- Fig. 2: zeigt eine schematische Darstellung eines Fächergreifers einer Vorrichtung zur Herstellung eines Sandwichbauteils von der Seite.

### Detaillierte Beschreibung der Erfindung

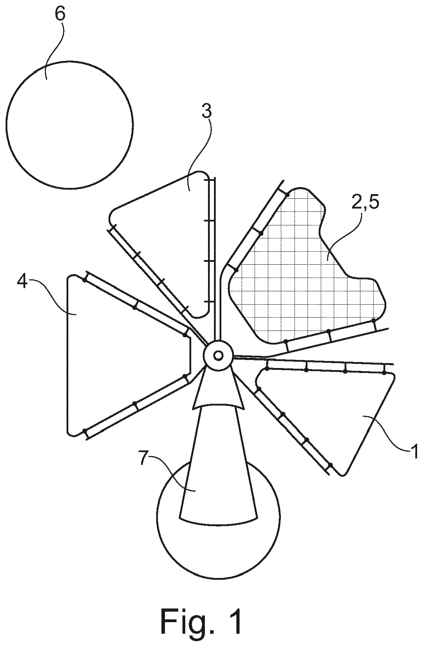

Fig. 1 zeigt einen Fächergreifer 7, der als Roboter ausgeführt ist und als Manipulator für vier Materialzuschnitte 1, 2, 3 und 4 (auch Lagen genannt) dient. Der Fächergreifer 7 bringt die Lagen, also Materialzuschnitte 1, 2, 3, 4, umfassend auch den durch den Materialzuschnitt 2 gebildeten Kern 5, zum Sprühauftrag in die jeweilige Position gegenüber dem Sprühkopf der Sprüheinheit 6.

Nach dem Sprühauftrag werden die Lagen 1, 2, 3, 4 mittels Fächergreifer 7 übereinander (vertikal) gefahren und in die Presse eingelegt. Am Fächergreifer 7 werden sodann die Befestigungspunkte bzw. Haltepunkte der jeweiligen Lagen, also Materialzuschnitte 1, 2, 3, 4 einzeln nacheinander oder gleichzeitig geöffnet, sodass Lage für Lage im beheizten Press-Werkzeug abgelegt werden kann. Die Presse wird geschlossen und der Sandwich gepresst. Optional kann auch gepresst werden, sobald die Lagen übereinander gefahren (vertikal übereinander positioniert) und während die Lagen noch am jeweiligen Fächer des Fächergreifers 7 befestigt sind.

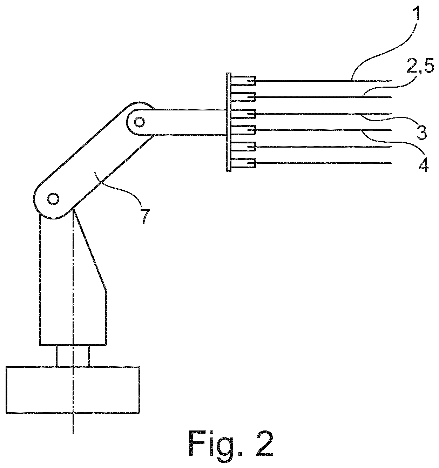

In Fig. 2 ist eine Seitenansicht eines Fächergreifers 7 dargestellt, wobei die einzelnen Lagen, also Materialzuschnitte 1, 2, 3, 4 und noch weitere Materialzuschnitte vertikal versetzt angeordnet gehalten werden und zur weiteren Bearbeitung bereitgestellt werden.

### Bezugszeichenliste

- 1: Erster Materialzuschnitt
- 2: Zweiter Materialzuschnitt
- 3: Dritter Materialzuschnitt
- 4: Vierter Materialzuschnitt

- 5: Kernschicht
- 6: Sprühkopf
- 7: Fächergreifer

## Patentansprüche

1. Verfahren zur Herstellung eines Sandwichbauteils gemäß den folgenden Schritten:
- Bereitstellen mehrerer Materialzuschnitte (1, 2, 3, 4),
- Aufbringen zumindest eines Matrixmaterials auf die Ober- und/oder Unterseite zumindest eines Materialzuschnittes (1, 2, 3, 4),
- Anordnen der Materialzuschnitte (1, 2, 3, 4) übereinander und nebeneinander, wobei zumindest zwei Materialzuschnitte (1, 2, 3, 4) übereinander angeordnet werden,
- wobei zumindest zwei der Materialzuschnitte (1, 2, 3, 4) Fasermaterial umfassen, wobei zumindest zwei der Materialzuschnitte (1, 2, 3, 4) unterschiedlich ausgebildet sind, dadurch dass die zwei Materialzuschnitte (1, 2, 3, 4) eine voneinander verschiedene Fläche aufweisen; so dass zumindest eine horizontale und vertikale Zone des Sandwichbauteils geschaffen wird, mit anderen mechanischen Eigenschaften als andere Bereiche des Sandwichbauteils,
- Verpressen der Materialzuschnitte (1, 2, 3, 4) zu dem Sandwichbauteil, **dadurch gekennzeichnet, dass** einer der Materialzuschnitte (1, 2, 3, 4) durch eine Kernschicht (5) gebildet wird, wobei die Kernschicht (5) wabenartig ausgebildet ist, wobei die Kernschicht (5) so angeordnet wird, dass die Kernschicht (5) zwischen zumindest zwei anderen Materialzuschnitten (1, 2, 3, 4) des Sandwichbauteils zu liegen kommt, wobei zumindest an einer Seite der Kernschicht (5) zumindest zwei der Materialzuschnitte (1, 2, 3, 4) angeordnet werden, wobei auf diese zwei Materialzuschnitte (1, 2, 3, 4) in unterschiedlicher Weise Matrixmaterial aufgebracht wird, dadurch dass eine unterschiedlichen Art von Matrixmaterial auf die Materialzuschnitte aufgebracht wird.

2. Verfahren zur Herstellung eines Sandwichbauteiles nach Anspruch 1, **dadurch gekennzeichnet, dass** die zumindest zwei Materialzuschnitte (1, 2, 3, 4) unterschiedlich ausgebildet sind dadurch dass sich die vorherrschende Faserrichtung der in den Materialzuschnitten (1, 2, 3, 4) enthaltenen Fasern von zumindest zwei Materialzuschnitten (1, 2, 3, 4) voneinander unterscheiden sind.

## Claims

1. Method for manufacturing a sandwich component according to the following steps:
- providing a plurality of material blanks (1, 2, 3, 4),
- applying at least one matrix material to the upper side and/or the underside of at least one material blank (1, 2, 3, 4),
- arranging the material blanks (1, 2, 3, 4) above one another and next to one another, wherein at least two material blanks (1, 2, 3, 4) are arranged one above another,
- wherein at least two of the material blanks (1, 2, 3, 4) comprise fibrous material, wherein at least two of the material blanks (1, 2, 3, 4) differ in design in that the two material blanks (1, 2, 3, 4) have a surface area which differs from one another; with the result that at least one horizontal and vertical zone of the sandwich component is created having different mechanical properties than other regions of the sandwich component,
- pressing the material blanks (1, 2, 3, 4) to form the sandwich component, **characterized in that** one of the material blanks (1, 2, 3, 4) is formed by a core layer (5), wherein the core layer (5) is formed in the manner of a honeycomb, wherein the core layer (5) is arranged in such a manner that the core layer (5) comes to lie between at least two other material blanks (1, 2, 3, 4) of the sandwich component, wherein at least two of the material blanks (1, 2, 3, 4) are arranged at least on one side of the core layer (5), wherein matrix material is applied in a different way to these two material blanks (1, 2, 3, 4) **in that** a different type of matrix material is applied to the material blanks.

2. Method for manufacturing a sandwich component according to Claim 1, **characterized in that** the at least two material blanks (1, 2, 3, 4) differ in design **in that** the prevailing fibre direction of the fibres, contained in the material blanks (1, 2, 3, 4), of at least two material blanks (1, 2, 3, 4) differ from one another.

## Revendications

1. Procédé de fabrication d'une pièce en sandwich selon les étapes suivantes :
- fournir plusieurs flans de matière (1, 2, 3, 4),
- appliquer au moins une matière de matrice sur le côté supérieur et/ou inférieur d'au moins un flan de matière (1, 2, 3, 4),
- disposer les flans de matière (1, 2, 3, 4) les uns au-dessus des autres et les uns à côté des autres, au moins deux flans de matière (1, 2, 3,4) étant disposés l'un au-dessus de l'autre,
- au moins deux des flans de matière (1, 2, 3, 4) comprenant une matière fibreuse, au moins deux des flans de matière (1, 2, 3, 4) étant conçus différemment en ce que les deux flans de matière (1, 2, 3, 4) comportent une surface différente de sorte qu'au moins une zone horizontale et une zone verticale de la pièce en sandwich sont créées qui présentent des propriétés mécaniques différentes de celles des autres zones de la pièce en sandwich,
- comprimer les flans de matière (1, 2, 3, 4) pour obtenir la pièce en sandwich, **caractérisé en ce que** l'un des flans de matière (1, 2, 3, 4) est formé par une couche centrale (5), la couche centrale (5) étant conçue de manière alvéolaire, la couche centrale (5) étant disposée de telle sorte que la couche centrale (5) vient se placer entre au moins deux autres flans de matière (1, 2, 3, 4) de la pièce en sandwich, au moins deux des flans de matière (1, 2, 3, 4) étant disposés sur au moins un côté de la couche centrale (5), la matière de matrice étant appliquée sur ces deux flans de matière (1, 2, 3, 4) de différentes manières **en ce qu'**un type différent de matière de matrice est appliqué sur les flans de matière.

2. Procédé de fabrication d'une pièce en sandwich selon la revendication 1, **caractérisé en ce que** les au moins deux flans de matière (1, 2, 3, 4) sont conçus différemment, **en ce que** les directions prédominantes des fibres contenues dans les flans de matière (1, 2, 3, 4) d'au moins deux flans de matière (1, 2, 3, 4) sont différentes les unes des autres.
